# FASCICULE DE BREVET EUROPEEN

(11) **EP 0 333 579 B1**
(45) Date de publication et mention de la délivrance du brevet: **27.01.1993**
(21) Numéro de dépôt: 89400700.4
(22) Date de dépôt: 14.03.1989
(51) Int. Cl.: B60K 37/02, F16B 1/00

(54) **Système de fixation pour tableau de bord de véhicule automobile**
Befestigungssystem für Fahrzeugarmaturenbrett
Fixation system for motor vehicle dashboard

(30) Priorité: 16.03.1988 FR 8803380
(43) Date de publication de la demande: 20.09.1989
(73) Titulaire: JAEGER, F-92303 Levallois-Perret (FR)
(72) Inventeur: Lazareff, André, F-92110 Clichy (FR)
(74) Mandataire: Martin, Jean-Jacques

(56) Documents cités:
- FR-A- 535 518
- FR-A- 1 396 724
- GB-A- 492 686
- GB-A- 1 386 408
- US-A- 3 537 499

## Description

La présente invention concerne le domaine des tableaux de bord de véhicule automobile. La présente invention a pour but de proposer un système permettant de fixer des accessoires, tels que des mouvements de mesure ou indicateurs, sur une plaque support d'un tableau de bord de véhicule automobile, par assemblage automatique.

Un autre but de la présente invention est de proposer un système permettant de fixer les accessoires précités de façon démontable.

Un autre but de la présente invention est de proposer un système permettant de fixer élastiquement les accessoires, c'est-à-dire d'éviter toute vibration de ceux-ci à l'utilisation.

Un but auxiliaire de la présente invention est de proposer un système permettant de fixer simultanément sur la plaque support d'un tableau de bord de véhicule automobile, un accessoire, tel qu'un mouvement de mesure ou afficheur, et un guide de lumière associé.

Les accessoires sont actuellement fixés sur les plaques support de tableaux de bord de véhicule automobile, par collage, ou à l'aide de rivets ou vis. Cependant, ces moyens ne donnent pas entière satisfaction. Le collage est difficile à utiliser en fabrication de grande série et de plus n'autorise pas le démontage. De même, les rivets n'autorisent pas le démontage. Enfin, les vis sont difficiles à mettre en oeuvre dans un cycle de montage automatique et relativement coûteuses.

Le document US-A-3 537 499 décrit un dispositif de fixation notamment pour pièces de chassis d'aéronefs, qui comprend :
- un élément support pourvu sur une face commune de quatre structures en saillie recourbées sur leurs surfaces extérieures pour former des crochets,
- un accessoire constitué d'un écrou comportant un corps pourvu de quatre protubérances en saillie sur sa surface extérieure et adaptées pour être intercalées entre les structures en saillie de l'élément support, et
- une pince de maintien adaptée pour être engagée dans lesdites structures en crochet de l'élément support, et qui possède un diamètre interne supérieur à la section du corps de l'accessoire et supérieur à l'encombrement externe des structures en saillie de l'élément support, tout en étant inférieur à l'encombrement externe des protubérances prévues sur ledit accessoire.

Le document GB-A-1 386 408 décrit un système pour l'éclairage d'instruments sur véhicules automobiles, qui comprend :
- un panneau support,
- des instruments placés dans des ouvertures du panneau support,
- une pièce d'habillage recouvrant le panneau support et munie de fenêtres en regard des instruments, ladite pièce d'habillage étant munie de canaux latéraux ajourés et d'entretoises,
- des moyens de fixation, tels que des vis engagées dans les entretoises pour fixer la pièce d'habillage sur le panneau support, et
- des guides optiques placés dans les canaux de la pièce d'habillage, pour éclairer les instruments par les jours des canaux.

La présente invention vient améliorer la situation en proposant un système répondant aux buts précités qui comprend de façon connue en soi par le document US-A-3 537 499:
- une plaque support pourvue sur une face commune, de plusieurs structures en saillie formant crochets,
- un accessoire comportant un corps pourvu de plusieurs protubérances en saillie sur sa surface extérieure, et
- un élément de maintien adapté pour être engagé dans lesdites structures en crochet et qui possède un diamètre interne supérieur à la section du corps de l'accessoire et inférieur à l'encombrement externe des protubérances prévues sur ledit accessoire,
   ce système étant en outre caractérisé selon l'invention, par le fait que :
- la plaque support est intégrée dans un tableau de bord de véhicule automobile,
- la plaque support comprend deux structures en saillie munies chacune sur leurs surfaces internes en regard, d'une denture formant crochet,
- l'accessoire comprend deux protubérances,
- l'élément de maintien est formé d'un anneau fermé, et
- la différence (L3 - L4) entre d'une part la distance (L3) séparant les surfaces inférieures (114, 134) des structures en saillie formant crochets (110, 130) et la plaque support (100) et d'autre part l'épaisseur (L4) de l'anneau (300) est inférieure à la distance (L5) séparant la surface supérieure des protubérances (210, 220) et la plaque support.

D'autres caractéristiques, buts et avantages de la présente invention apparaîtront à la lecture de la description détaillée qui va suivre, et en regard des dessins annexés donnés à titre d'exemple non limitatif et sur lesquels :
- la figure 1 représente une vue schématique en perspective éclatée d'un système conforme à la présente invention,

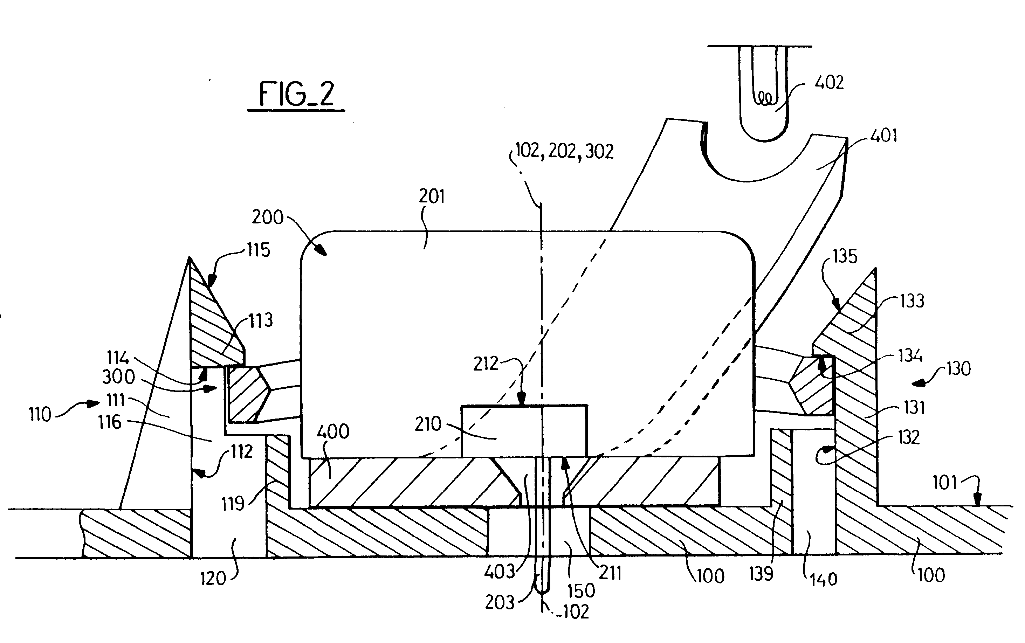

- la figure 2 représente une vue schématique en coupe du même dispositif, selon le plan de coupe référencé II-II sur la figure 1,
- les figures 3A, 3B, 3C et 3D représentent quatre étapes de l'assemblage à l'aide d'un système conforme à la présente invention, et
- la figure 4 représente une vue en perspective d'une variante de réalisation d'un anneau de maintien conforme à la présente invention.

Pour l'essentiel, comme illustré sur les figures annexées, le système conforme à la présente invention comprend une plaque support 100, au moins un accessoire 200 et un anneau de maintien 300.

La plaque support 100 est pourvue de deux structures en crochet 110, 130. Celles-ci sont formées en saillie sur une face commune 101 de la plaque support et sensiblement diamètralement opposées par rapport à un axe 102 du système qui s'étend perpendiculairement à la plaque support 100.

Les structures en crochet 110, 130, sont formées de murets 111, 131 qui s'étendent perpendiculairement à la plaque support 100. Selon l'illustration donnée sur la figure, les murets 111, 131, sont formés de secteurs de cylindre centrés sur l'axe 102 précité.

Les murets 111, 131, sont munis à proximité de leurs bords libres éloignés de la surface 101 de la plaque support 100 et sur leurs surfaces 112, 132, respectivement opposées et dirigées vers l'axe 102, de dentures 113, 133.

Les surfaces inférieures 114, 134, de chaque denture 113, 133, qui sont dirigées vers la surface 101 de la plaque support, s'étendent sensiblement parallèlement à cette surface 101. De plus, les surfaces inférieures 114 et 134 des dentures 113 et 133 sont généralement coplanaires.

Par contre, les surfaces supérieures 115 et 135 des dentures 113, 133, qui sont dirigées à l'opposé de la surface 101 de la plaque support, ne sont pas parallèles à cette surface 101 mais convergent en rapprochement de cette surface 101. Les surfaces supérieures 115, 135, des dentures 113, 133, prolongent d'ailleurs la surface supérieure des murets 111, 131, pour définir des bords d'engagement facilitant l'insertion de l'anneau 300 sous les dentures 113, 133, comme cela sera indiqué par la suite.

L'une des structures en crochet 110, est munie d'une ouverture 116, permettant d'exercer un effort radial sur l'anneau 300 lorsque celui-ci est engagé sous les dentures 113, 133. Plus précisément l'ouverture 116 est ménagée dans le muret 111. Elle est orientée radialement par rapport à l'axe 102 et s'étend dans le muret 111 entre la surface 101 de la plaque support 100 et la surface inférieure 114 de la denture 113.

Par ailleurs, de préférence, afin de limiter la déformation de l'anneau 300 en rapprochement de la surface 101 de la plaque support 100 lors d'un assemblage automatique, les murets 111, 131, sont munis de toiles 117, 118, 119, 137, 138, 139. Ces toiles sont dirigées sensiblement vers l'axe 102. Elles possèdent bien entendu une hauteur, par rapport à la surface 101 de la plaque support 100 inférieure à la distance séparant la surface 101 de la plaque support, de la surface inférieure 114, 134 des dentures 113, 133.

Selon le mode de réalisation illustré sur les figures annexées, bien entendu non limitatif, il est ainsi prévu une toile 117, 118 et 137, 138 au niveau de chacune des extrémités latérales des murets 111, 131, d'une part, et une toile 119, 139, sensiblement à mi-longueur des murets 111, 131, d'autre part. Les toiles centrales 119, 139, ont de préférence une section droite généralement en "U" et entourent des ouvertures 120, 140 ménagées dans la plaque support 100 en regard des surfaces inférieures 114, 134, des dentures 113, 133. Ces ouvertures 120, 140 ont pour but de permettre le passage d'inserts mobiles permettant la réalisation de l'ensemble de la plaque support par moulage de matière plastique.

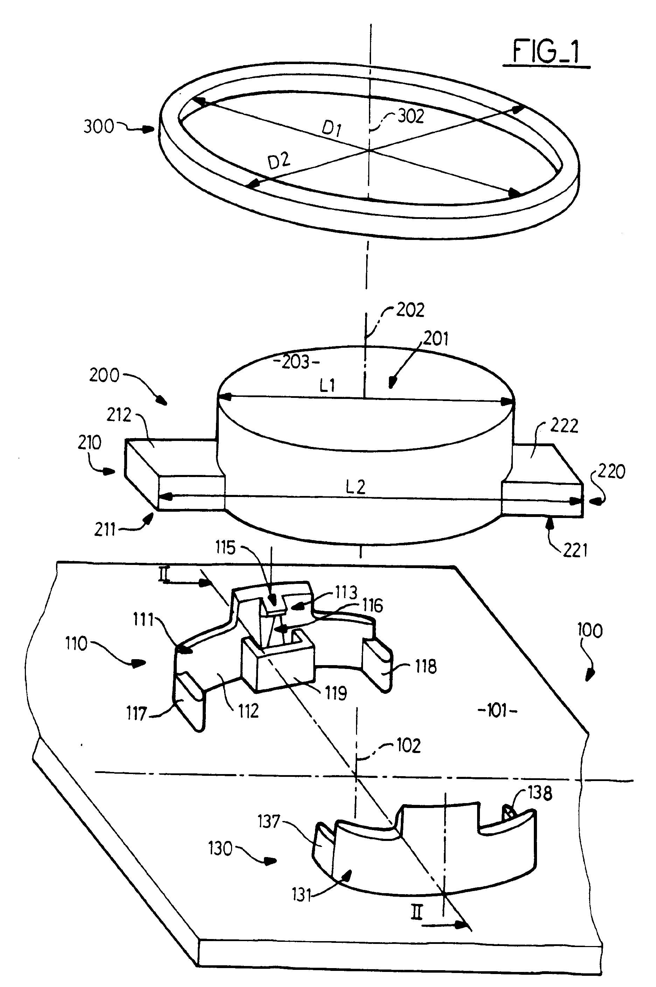

L'accessoire 200 illustré sur la figure 1 comprend un corps 201 possédant un axe 202 et deux protubérances 210, 220, en saillie sur la périphérie extérieure du corps 201 et sensiblement diamètralement opposées par rapport à l'axe 202. Les protubérances 210, 220, sont délimitées par des surfaces inférieures 211, 221, et supérieures 212, 222, qui s'étendent perpendiculairement à l'axe 202 et sont respectivement coplanaires deux à deux.

Selon l'illustration donnée sur la figure 1, le corps 201 possède une enveloppe généralement cylindrique de révolution autour de l'axe 202. Cependant, cette géométrie n'est pas limitative. Il est simplement nécessaire que la section droite du corps 201 soit inférieure à l'espace libre entre les structures en crochet 110, 130, pour placer l'accessoire 200 entre ces structures, en contact avec la surface 101 de la plaque support 100.

L'anneau 300 illustré sur les figures annexées est centré sur un axe 302. L'anneau de maintien 300 peut être réalisé en métal ou en matière plastique. Le diamètre interne D1 de l'anneau 300 doit être supérieur à la plus grande dimension L1 du corps 201 transversale à l'axe 202 pour permettre d'engager l'anneau 300 sur la périphérie du corps 201. Cependant, le diamètre interne D1 de l'anneau 300 doit être inférieur à l'encombrement extérieur L2 des protubérances 210, 220, considéré transversalement à l'axe 202. Ainsi, l'anneau 300 repose sur la surface supérieure 212, 222 des protubérances 210 et 220 lorsqu'il est engagé sur la périphérie du corps 201.

Par ailleurs, le rayon extérieur de l'anneau de maintien 300, qui correspond à la moitié du diamètre extérieur D2, peut être sensiblement égal, tout en restant légèrement inférieur, au rayon des murets 111, 131. Ainsi, l'anneau 300 peut être engagé élastiquement sous les dentures 113, 133.

Le cas échéant, la plaque support 100 peut être munie d'une ouverture 150 traversante centrée sur l'axe 102, pour permettre le passage de liaisons électriques 203 assurant l'alimentation de l'accessoire 200 ou d'un axe de sortie de l'accessoire.

De plus, une butée 400 peut être intercalée entre l'accessoire 300 et la surface 101 de la plaque support 100. La butée 400 peut être formée d'une rondelle ayant sensiblement la même section que le corps 201. En variante, la butée 400 intercalée entre l'accessoire 200 et la surface 101 peut être remplacée ou associée à un guide de lumière 401 permettant d'éclairer un élément de l'accessoire 200, par exemple une aiguille, à l'aide d'une source lumineuse402 éloignée de l'accessoire et placée en regard du guide 401. L'utilisation d'un tel guide optique 401 pour éclairer un accessoire 200 est connue en soi et ne sera donc pas décrite plus en détail par la suite.

On notera que lorsqu'une butée 400 et/ou un guide optique 401 est intercalé(e) entre l'accessoire 200 et la surface 101 de la plaque support 100, cette butée 400 et/ou ce guide optique 401 peut être muni(e) d'un alésage 403 aligné sur l'alésage 150 pour autoriser le passage de liaisons électriques 203 ou d'un axe de sortie de l'accessoire.

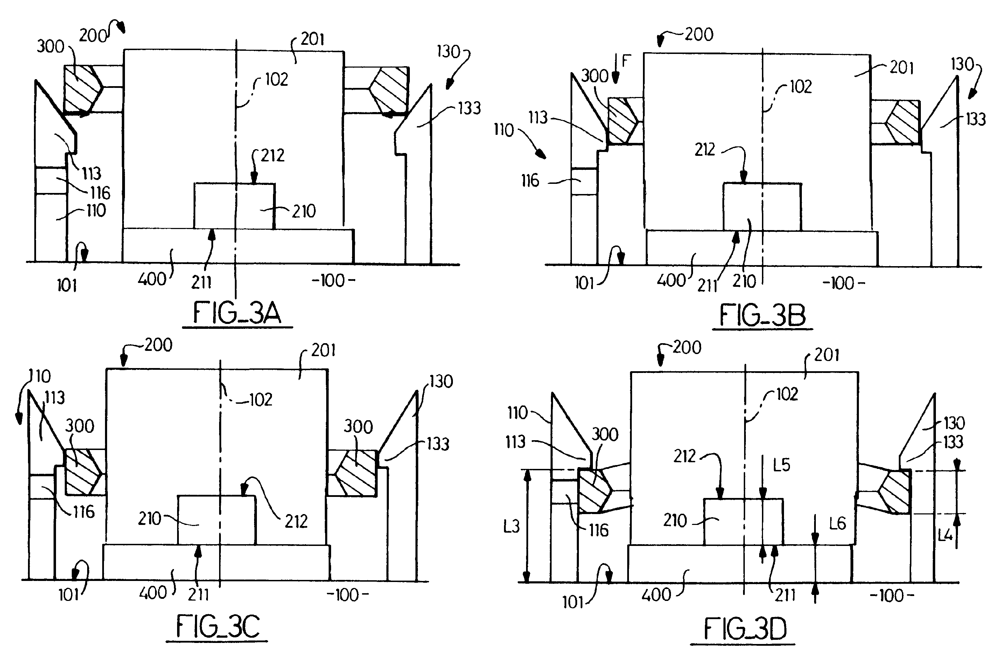

L'assemblage de l'accessoire 200 à l'aide du système conforme à l'invention est illustré sur les figures 3A, 3B, 3C et 3D.

Dans un premier temps l'accessoire 200 est placé entre les structures en crochet 110, 130, le cas échéant, après avoir intercalé une butée 400 ou un guide optique 401. Comme illustré sur la figure 3A, l'anneau 300 est engagé sur le corps 201. Dans un premier temps, il vient reposer contre les surfaces convergentes d'engagement 115, 135. Dans cette position les axes 102, 202 et 302 précités sont généralement coaxiaux.

Lorsqu'une force F orientée parallèlement aux axes 102, 202 et 302, et dirigée vers la surface 101 de la plaque support 100 est exercée sur l'anneau 300, comme illustré sur la figure 3B, l'anneau 300 est déformé radialement pour pénétrer entre les crochets.

Comme illustré sur la figure 3C, l'anneau 300 vient ainsi en appui contre les surfaces supérieures 212 et 202 des protubérances 210, 220.

L'immobilisation de l'accessoire 200 est réalisée lorsque l'anneau 300 atteint les surfaces inférieures 114, 134, des dentures 113, 133. L'anneau 300 reprend alors une forme générale circulaire pour venir s'engager sous les dentures en appui contre les surfaces inférieures 114, 134 de celles-ci. Un tel montage peut aisément être assuré en automatique. On notera cependant que, dans le cadre de la présente invention, pour garantir une fixation parfaite de l'accessoire 200, exempte de vibration, l'engagement de l'anneau 300 sous les dentures 113, 133, comme illustré sur la figure 3D, n'est réalisé qu'après venue en butée contre les surfaces supérieures 212, 222 des protubérances 210, 220, et donc qu'après déformation de l'anneau 300 perpendiculairement à son plan moyen transversal à l'axe 202.

A cette fin, il est nécessaire que la différence L3 - L4 entre, d'une part, la distance L3 séparant les surfaces inférieures 114, 134 de la surface 101 et, d'autre part, l'épaisseur L4 de l'anneau considérée parallèlement à l'axe 302, soit inférieure à la somme L5 + L6 de l'épaisseur L5 des protubérances 210, 220, considérée parallèlement à l'axe 202 et de l'épaisseur L6 de la butée 400 ou guide optique 401, s'il en existe, considérée parallèlement au même axe.

L'homme de l'art comprendra aisément que pour démonter l'accessoire 200, il suffit d'engager un outil dans l'ouverture 116 et d'exercer un effort radial sur l'anneau 300 suffisant pour déformer celui-ci de telle sorte que l'anneau échappe à la denture 113. Ainsi, grâce à la présente invention, les opérations de maintenance sur tableau de bord sont largement facilitées.

On peut prévoir de réaliser l'anneau 300 rigide perpendiculairement à son plan moyen orthogonal à l'axe 302 et en revanche de réaliser les protubérances 210, 220 souples.

De plus, l'anneau de maintien 300 peut être solidaire d'éléments auxiliaires.

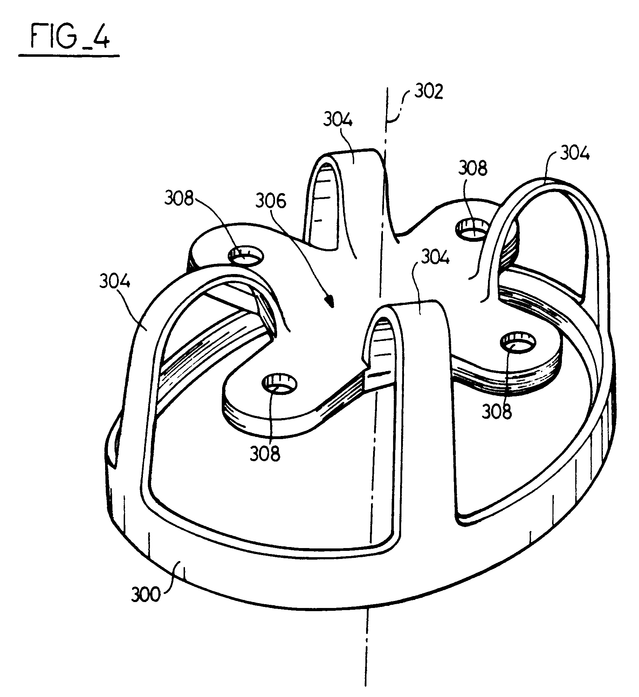

Par exemple, comme illustré sur la figure 4 annexée, l'anneau 300 peut être rendu solidaire, par l'intermédiaire de pattes souples 304, d'une plaquette 306 en matériau électriquement isolant.

Selon la figure 4, il est ainsi prévu quatre pattes 304 équiréparties autour de l'axe 302, reliant l'anneau 300 et la plaquette 306.

Une telle plaquette 306 peut être destinée à reposer contre la face arrière 203 du corps 201 pour assurer une isolation électrique entre le boîtier ou corps 201 et des contacts électriques alimentant l'accessoire 200. La plaquette 306 peut être pourvue d'alésages traversants 308 à cet effet pour permettre le passage des contacts électriques précités.

L'anneau 300, la plaquette 306 et les pattes 304 peuvent être réalisés en matière plastique d'une seule pièce.

On notera que l'anneau 300 associé à la plaquette 306, peut être prépositionné sur le corps 201 de l'accessoire. Cette disposition facilite le montage du système.

## Revendications

1. Système de fixation du type comprenant:
- une plaque support (100) pourvue sur une face commune (101) de plusieurs structures en saillie formant crochets (110, 130),
- un accessoire (200) comportant un corps (201) pourvu de plusieurs protubérances (210, 220) en saillie sur sa surface extérieure, et
- un élément de maintien (300) adapté pour être engagé dans lesdites structures en crochet (110, 130) et qui possède un diamètre interne supérieur à la section du corps (201) de l'accessoire et inférieur à l'encombrement externe des protubérances (210, 220) prévues sur l'accessoire (200),
caractérisé par le fait que:
- la plaque support (100) est intégrée dans un tableau de bord de véhicule automobile,
- la plaque support (100) comprend deux structures en saillie (110, 130) munies chacune sur leurs surfaces internes en regard d'une denture (113, 133) formant crochet,
- l'accessoire (200) comprend deux protubérances (210, 220),
- l'élément de maintien (300) est formé d'un anneau fermé, et
- la différence (L3 - L4) entre d'une part la distance (L3) séparant les surfaces inférieures (114, 134) des structures en saillie formant crochets (110, 130) et la plaque support (100) et d'autre part l'épaisseur (L4) de l'anneau (300) est inférieure à la distance (L5) séparant la surface supérieure des protubérances (210, 220) et la plaque support (100).

2. Système de fixation selon la revendication 1, caractérisé par le fait que le corps (201) de l'accessoire (200) est pourvu de deux protubérances (210, 220) sensiblement diamètralement opposées par rapport à l'axe (202) du corps.

3. Système de fixation selon l'une des revendications 1 et 2, caractérisé par le fait qu'une butée (400) est intercalée entre l'accessoire (200) et la plaque support (100).

4. Système de fixation selon l'une des revendications 1 à 2, caractérisé par le fait qu'un guide optique (401) est intercalé entre l'accessoire (200) et la plaque support (100).

5. Système de fixation selon l'une des revendications 1 à 4, caractérisé par le fait que les structures en crochet (110, 130) comportent des surfaces d'engagement (115, 135) qui convergent en direction de la plaque support (100) pour faciliter l'engagement de l'anneau (300) sous les structures en crochet.

6. Système de fixation selon l'une des revendications 1 à 5, caractérisé par le fait que l'une au moins des structures en crochet (110) possède une ouverture (116) permettant d'exercer un effort radial sur l'anneau (300), pour autoriser le démontage de l'accessoire (200).

7. Système de fixation selon l'une des revendications 1 à 6, caractérisé par le fait que l'anneau (300) peut se déformer, d'une part, radialement, d'autre part, perpendiculairement à son plan moyen.

8. Système de fixation selon l'une des revendications 1 à 7, caractérisé par le fait que l'anneau (300) est réalisé en métal.

9. Système de fixation selon l'une des revendications 1 à 7, caractérisé par le fait que l'anneau (300) est réalisé en matière plastique.

10. Système de fixation selon l'une des revendications 1 à 9, caractérisé par le fait que les protubérances (210, 220) solidaires du corps (201) de l'accessoire (200) sont souples.

11. Système de fixation selon l'une des revendications 1 à 10, caractérisé par le fait que l'anneau (300) est solidaire par l'intermédiaire de pattes souples (304), d'une plaquette (306) en matériau électriquement isolant.

12. Système de fixation selon la revendication 11, caractérisé par le fait que la plaquette (306) possède des alésages (308) traversants.

## Patentansprüche

1. Befestigungssystem des Typs mit:
- einer Unterlagplatte (100), die auf einer gemeinsamen Fläche (101) mit mehreren Haken (110, 130) bildenden herausragenden Organen versehen ist,
- einem Ergänzungsteil (200) mit einem Hauptstück (201), das auf seiner Außenfläche mit mehreren herausragenden Vorsprüngen (210, 220) versehen ist,
- einem Halteteil (300), das mit den genannten hakenförmigen Organen (110, 130) in Eingriff bringbar ist und einen Innendurchmesser hat, der größer als der Querschnitt des Hauptstücks (201) vom Ergänzungsteil und kleiner als die Außenabmessung der am Ergänzungsteil (200) vorgesehenen Vorsprünge (210, 220) ist,
dadurch gekennzeichnet, daß
- die Unterlagplatte (100) in ein Kraftfahrzeug-Armaturenbrett integriert ist,
- die Unterlagplatte (100) zwei herausragende Organe (110, 130) aufweist, die je auf ihren sich gegenüberliegenden Innenflächen mit einer einen Haken bildenden Verzahnung (113, 133) versehen sind,
- das Ergänzungsteil (200) zwei Vorsprünge (210, 220) aufweist,
- das Halteteil (300) von einem geschlossenen Ring gebildet ist, und
- der Unterschied (L3 - L4) zwischen einerseits dem Abstand (L3) zwischen den Unterseiten (114, 134) der Haken bildenden herausragenden Organe (110, 130) und der Unterlagplatte (100) und andererseits der Dicke (L4) des Ringes (300) kleiner ist als der Abstand (L5) zwischen der Oberseite der Vorsprünge (210, 220) und der Unterlagplatte (100).

2. Befestigungssystem nach Anspruch 1, dadurch gekennzeichnet, daß das Hauptstück (201) des Ergänzungsteils (200) mit zwei Vorsprüngen (210, 220) versehen ist, die sich in bezug auf die Achse (202) des Hauptstücks im wesentlichen diametral entgegengesetzt angeordnet sind.

3. Befestigungssystem nach einem der Ansprüche 1 und 2, dadurch gekennzeichnet, daß zwischen dem Ergänzungsteil (200) und der Unterlagplatte (100) ein Anschlagstück (400) zwischengesetzt ist.

4. Befestigungssystem nach einem der Ansprüche 1 bis 2, dadurch gekennzeichnet, daß zwischen dem Ergänzungsteil (200) und der Unterlagplatte (100) ein optischer Leiter (401) zwischengesetzt ist.

5. Befestigungssystem nach einem der Ansprüche 1 bis 4, dadurch gekennzeichnet, daß die hakenförmigen Organe (110, 130) Eingriffsflächen (115, 135) aufweisen, die in Richtung auf die Unterlagplatte (100) aufeinander zulaufen, um das Ineingriffbringen des Ringes (300) unter den hakenförmigen Organen zu vereinfachen.

6. Befestigungssystem nach einem der Ansprüche 1 bis 5, dadurch gekennzeichnet, daß zumindest eines der hakenförmigen Organe (110) eine Öffnung (116) aufweist, die das Ausüben einer radialen Kraft auf den Ring (300) ermöglicht, um die Demontage des Ergänzungsteils (200) zu ermöglichen.

7. Befestigungssystem nach einem der Ansprüche 1 bis 6, dadurch gekennzeichnet, daß der Ring (300) einerseits radial und andererseits rechtwinklig zu seiner Mittelebene verformbar ist.

8. Befestigungssystem nach einem der Ansprüche 1 bis 7, dadurch gekennzeichnet, daß der Ring (300) aus Metall hergestellt ist.

9. Befestigungssystem nach einem der Ansprüche 1 bis 7, dadurch gekennzeichnet, daß der Ring (300) aus Kunststoff hergestellt ist.

10. Befestigungssystem nach einem der Ansprüche 1 bis 9, dadurch gekennzeichnet, daß die mit dem Hauptstück (201) des Ergänzungsteils (200) fest bzw. einstückig verbundenen Vorsprünge (210, 220) flexibel sind.

11. Befestigungssystem nach einem der Ansprüche 1 bis 10, dadurch gekennzeichnet, daß der Ring (300) über flexible Arme (304) mit einer Scheibe (306) aus elektrisch isolierendem Werkstoff fest bzw. einstückig verbunden ist.

12. Befestigungssystem nach Anspruch 11, dadurch gekennzeichnet, daß die Scheibe (306) durchgehende Bohrungen (308) aufweist.

## Claims

1. Attachment means of the type comprising:
- a supporting plate (100) provided on the same side (101) with a plurality of projecting structures forming hooks (110, 130),
- an accessory (200) comprising a body (201) provided with a plurality of protuberances (210, 220) projecting from its outer surface, and
- a holding member (300) which is designed to be engaged by the said hook structures (110, 130) whichhas an internal diameter greater than the cross-section of the body (201) of the accessory and less than the external dimensions of the protuberances (210, 220) provided on the accessory (200),
characterised in that:
the supporting plate (100) is incorporated into the dashboard of a motor vehicle,
- the supporting plate (100) comprises two projecting structures (110, 130) each provided on their inner opposite surfaces with a tooth (113, 133) forming a hook,
- the accessory (200) comprises two protuberances (210, 220),
- the holding member (300) is in the form of a losed ring, and
- the difference (L3-L4) between the distance (L3) separating the lower surfaces (114, 134) of the projecting structures forming hooks (110, 130) and the supporting plate (100) on the one band, and the thickness (L4) of the ring (300) on the other, is less than the distance (L5) separating the upper surfaces of the protuberances (210, 222) and the supporting plate (100).

2. Attachment means according to claim 1, characterised in that the body (201) of the accessory (200) is provided with two protuberances (210, 220) which are substantially diametrically opposite with respect to the axis (202) of the body.

3. Attachment means according to either of claims 1 or 2, characterised in that a stop (400) is located between the accessory (200) and the supporting plate (100).

4. Attachment means according to either of claims 1 or 2, characterised in that an optical guide (401) is located between the accessory (200) and the supporting plate (100).

5. Attachment means according to any one of claims 1 to 4, characterised in that the hook structures (110, 130) comprise engaging surfaces (115, 135) which converge in the direction of the supporting plate (100) to assist the ring (300) to engage beneath the hook structures.

6. Attachment means according to any one of claims 1 to 5, characterised in that at least one of the hook structures (110) has an opening (116) by means of which a radial force can be applied to the ring (300) to allow the accessory to be released (200).

7. Attachment means according to anyone of claims 1 to 6, characterised in that the ring (300) may deform both radially and perpendicularly to its median plane.

8. Attachment means according to any one of claims 1 to 7, characterised in that the ring (300) is constructed of metal.

9. Attachment means according to one of claims 1 to 7, characterised in that the ring (300) is made of plastics material.

10. Attachment means according to one of claims 1 to 9, characterised in that the protuberances (210, 220) integral with the body (201) of the accessory (200) are flexible.

11. Attachment means according to one of claim 1 to 10, characterised in that the ring (300) is made integral with a plate (306) of electrically insulating material by means of flexible arms (304).

12. Attachment means according to claim 11, characterised in that the plate (306) has through bores (308).
